# FASCICULE DE BREVET EUROPEEN

(11) **EP 3 735 872 B1**
(45) Date de publication et mention de la délivrance du brevet: **01.12.2021**
(21) Numéro de dépôt: 20172548.8
(22) Date de dépôt: 30.04.2020
(51) Int. Cl.: A47J 31/057

(54) **MACHINE DE PRÉPARATION D'UNE BOISSON MUNIE D'UN RÉSERVOIR D'EAU ET D'UN CAPTEUR DE PRESSION POUR LA MESURE D'UNE QUANTITÉ D'EAU EXTRAITE DUDIT RÉSERVOIR**
GETRÄNKEZUBEREITUNGSMASCHINE, DIE MIT EINEM WASSERTANK UND EINEM DRUCKSENSOR ZUR MESSUNG EINER AUS DIESEM TANK AUSGEZOGENEN WASSERMENGE AUSGESTATTET IST
MACHINE FOR PREPARING A BEVERAGE PROVIDED WITH A WATER TANK AND A PRESSURE SENSOR FOR MEASURING AN AMOUNT OF WATER EXTRACTED FROM SAID TANK

(30) Priorité: 09.05.2019 FR 1904836
(43) Date de publication de la demande: 11.11.2020
(73) Titulaire: SEB S.A., 69130 Ecully (FR)
(72) Inventeur: LIN, Wen Qiang, 21120 IS-SUR-TILLE (FR); MANSEAU, Charles, 21000 DIJON (FR); DUMOUX, Philippe, 21120 GEMEAUX (FR)
(74) Mandataire: SEB Développement

(56) Documents cités:
- WO-A1-2011/006045
- WO-A1-2011/107861
- WO-A1-2016/093920
- FR-A1- 3 072 012
- US-A- 5 388 501
- US-B2- 8 695 482

## Description

### Domaine technique

La présente invention concerne une machine de préparation d'une boisson à partir d'un ingrédient, ladite machine permettant de préparer différents volumes d'une boisson, par exemple un volume correspondant à une petite tasse, à un mug ou à une carafe.

L'invention porte tout particulièrement sur une telle machine de préparation d'une boisson qui comporte un réservoir d'eau, une chaudière comprenant un tube à eau et un élément chauffant configuré pour chauffer l'eau circulant dans le tube à eau, un réceptacle destiné à recevoir l'ingrédient et un clapet anti-retour agencé entre le réservoir d'eau et le tube à eau pour la mise en oeuvre d'une pompe thermique assurant un écoulement de l'eau chaude dudit tube à eau vers ledit réceptacle.

### Etat de la technique

Les machines de préparation d'une boisson qui permettent de préparer différents volumes d'une boisson sont déjà connues de l'homme du métier. Celles-ci comportent généralement une technologie élaborée qui permet de contrôler la quantité de boisson délivrée dans le réceptacle, cette technologie étant mise en oeuvre à partir d'une pompe électrique ou d'un débitmètre. En connaissant les caractéristiques techniques de la pompe électrique, il est en effet possible d'en déduire le volume d'eau puisé dans le réservoir d'eau et distribué dans le réceptacle pour la préparation de la boisson. De même, le débitmètre permet de mesurer directement le volume d'eau puisé dans le réservoir d'eau et distribué dans le réceptacle pour la préparation de la boisson.

Il est connu la demande internationale de brevet WO2016093920A1 qui décrit une machine de préparation d'une boisson comprenant un réservoir d'eau, une chaudière comprenant un tube à eau et un élément chauffant configuré pour chauffer l'eau circulant dans le tube à eau, un réceptacle destiné à recevoir l'ingrédient, un clapet anti-retour agencé entre ledit réservoir d'eau et ledit tube à eau pour la mise en œuvre d'une pompe thermique assurant un écoulement de l'eau chaude dudit tube à eau vers ledit réceptacle. En outre, cette machine comprend des moyens de commande configurés pour commander électroniquement l'alimentation électrique de l'élément chauffant et pour permettre de sélectionner un volume de boisson à préparer, lesdits moyens de commande mettant en oeuvre un algorithme de gestion configuré pour déclencher ou couper l'alimentation électrique dudit élément chauffant de manière à fournir audit réceptacle un volume d'eau chaude. Selon cette machine, les moyens de commande comportent un contrôleur qui utilise des tables de paramètres permettant de définir une durée d'alimentation électrique de l'élément chauffant, ces paramètres étant fonction du type de café souhaité (normal, onctueux, intense ...) et de la quantité souhaitée. Ainsi, cette mise en œuvre selon WO2016093920A1 se base uniquement sur des paramètres prédéfinis, s'en tenir compte de la quantité d'eau réellement puisée du réservoir d'eau pour la préparation de la boisson.

### Exposé de l'invention

L'invention met en œuvre une alternative de conception d'une machine de préparation d'une boisson à partir d'un ingrédient, qui permet de préparer différents volumes de la boisson, ladite machine ayant pour avantage principal d'être plus simple de conception et moins onéreuse.

A cet effet, selon l'invention, la machine de préparation d'une boisson à partir d'un ingrédient comprend un réservoir d'eau permettant la réception d'une quantité d'eau définie, par exemple un litre ou un litre et demi, voire plus. La machine comprend une chaudière qui comprend un tube à eau et un élément chauffant configuré pour chauffer l'eau circulant dans le tube à eau. La machine comprend aussi un réceptacle destiné à recevoir l'ingrédient et un clapet anti-retour agencé entre le réservoir d'eau et le tube à eau pour la mise en œuvre d'une pompe thermique assurant un écoulement de l'eau chaude dudit tube à eau vers ledit réceptacle. La mise en œuvre d'une telle pompe thermique évite l'utilisation d'une pompe électrique pour faire circuler l'eau du réservoir vers la sortie du tube à eau, ce qui contribue à réduire le coût de conception de ladite machine.

En outre, la machine de préparation d'une boisson comprend des moyens de commande configurés pour commander électroniquement l'alimentation électrique de l'élément chauffant et pour permettre de sélectionner un volume de boisson à préparer. Ces moyens de commande mettent en œuvre un algorithme de gestion configuré pour déclencher ou couper l'alimentation électrique dudit élément chauffant de manière à fournir audit réceptacle un volume d'eau chaude.

Selon l'invention, les moyens de commande comportent un capteur de pression destiné à détecter une variation du volume d'eau dans le réservoir. Par ailleurs, l'algorithme de gestion commande l'arrêt de l'alimentation électrique de l'élément chauffant lorsque la variation du volume d'eau dans le réservoir permet de réaliser le volume sélectionné de boisson à préparer. En d'autres termes, l'algorithme de gestion détermine la quantité d'eau puisée du réservoir d'eau à partir de la variation de pression qui intervient au point de mesure dudit capteur de pression du fait de la baisse du volume d'eau dans ledit réservoir d'eau, ce qui permet ensuite audit algorithme de gestion de déterminer lorsque le volume de boisson préparé a atteint la quantité sélectionnée et de commander l'arrêt de l'élément chauffant afin de stopper le fonctionnement de la pompe thermique.

La mise en œuvre d'un tel capteur de pression est moins onéreuse qu'une pompe électrique ou qu'un débitmètre. En outre, les moyens de commande sur la machine de préparation d'une boisson selon l'invention permettent de déterminer une valeur réelle du volume d'eau puisée du réservoir - et non une valeur estimative basée sur un temps défini d'alimentation électrique de l'élément chauffant en fonction de paramètres - et d'arrêter en conséquence l'alimentation électrique de l'élément chauffant lorsque ledit volume d'eau puisé est proportionnel au volume de boisson sélectionné sur la machine.

Selon une réalisation de la machine de préparation d'une boisson objet de l'invention, le réservoir comporte un fond. De préférence, le capteur de pression est agencé sur le fond ou à proximité du fond. Cela permet de puiser la totalité ou la quasi-totalité de l'eau contenue dans le réservoir en préservant une mesure exacte du capteur de pression.

Selon une réalisation de la machine de préparation d'une boisson objet de l'invention, le capteur de pression est agencé horizontalement. Cela permet une meilleure précision de la mesure du capteur de pression. En variante, le capteur de pression est agencé verticalement, ce qui le rend moins sensible à l'entartrage.

Selon une réalisation de la machine de préparation d'une boisson objet de l'invention, celle-ci comporte un bâti, le réservoir d'eau étant amovible du bâti. En outre, le réservoir d'eau et le bâti comportent chacun une valve pour empêcher une fuite d'eau lorsque le réservoir est retiré du bâti. Le retrait du réservoir d'eau simplifie son remplissage en eau en le positionnant directement au-dessus d'un robinet d'eau, ainsi que son nettoyage. Des variantes de machines peuvent toutefois être envisagées dans le cadre de l'invention, avec un réservoir d'eau fixe vis-à-vis du bâti.

Selon une réalisation de la machine de préparation d'une boisson objet de l'invention, avec un réservoir d'eau amovible du bâti tel que précité, le capteur est assujetti au réservoir d'eau et comprend au moins un fil électrique comportant une extrémité libre munie d'une zone de contact électrique destinée à coopérer avec une borne de connexion agencée sur le bâti et reliée aux moyens de commande, la zone de contact étant séparable de la borne de connexion.

Selon une réalisation de la machine de préparation d'une boisson objet de l'invention, avec un réservoir d'eau amovible du bâti tel que précité, le capteur de pression est assujetti au bâti et est agencé en aval de la valve du réservoir, lorsque le réservoir est positionné sur le bâti. L'amont et l'aval sont définis par le sens d'écoulement de l'eau, l'eau s'écoulant du réservoir jusqu'au réceptacle contenant l'ingrédient, en passant par le tube d'eau logé dans le bâti. L'eau sort du réservoir d'eau en passant par la valve du réservoir et rentre dans le tube d'eau en passant par la valve du bâti. Cette mise en œuvre permet de relier directement le capteur de pression aux moyens de commande par l'intermédiaire d'au moins un fil d'alimentation électrique, sans utiliser de borne de connexion comme dans le cas précédent où le capteur est assujetti au réservoir.

De préférence, selon cette réalisation précitée de la machine de préparation d'une boisson, le bâti comporte une cavité à laquelle est reliée la valve dudit bâti, le capteur de pression étant agencé dans cette cavité directement en aval de la valve du bâti. En outre, la valve du réservoir est reliée à ladite cavité lorsque ledit réservoir est placé sur le bâti. Cette mise en œuvre présente pour avantage de regrouper le capteur de pression et les valves respectives du réservoir et du bâti, dans une même cavité, ce qui permet de réduire le coût de fabrication mais augmente les risques de perturbation de la mesure de la pression du fait que le capteur de pression est placé à proximité de l'écoulement de l'eau du réservoir vers le tube d'eau.

Selon une réalisation de la machine de préparation d'une boisson objet de l'invention, avec un réservoir d'eau amovible du bâti tel que précité, le bâti comporte une deuxième cavité et le réservoir est muni d'une deuxième valve reliée à la deuxième cavité lorsque le réservoir est placé sur le bâti. Le capteur de pression est agencé dans cette deuxième cavité. Cela augmente le coût de fabrication par rapport à la variante précédente, mais présente pour avantage de ne pas risquer de perturber la mesure de la pression étant donné que le capteur de pression est placé séparément de l'écoulement de l'eau du réservoir vers le tube d'eau. De préférence, selon cette réalisation, la deuxième cavité est agencée sous le réservoir lorsque celui-ci est placé sur le bâti.

Selon une réalisation de la machine de préparation d'une boisson objet de l'invention, le réservoir s'étend selon une direction verticale et présente une section transversale à la direction verticale constante. Cela permet de déterminer au moyen d'une formule mathématique simple le volume d'eau puisé en fonction de la variation de pression. Des variantes de la machine pourraient toutefois être envisagées avec une section transversale variable sur la hauteur du réservoir d'eau, la formule mathématique étant alors adaptée en conséquence.

Selon une réalisation de la machine de préparation d'une boisson objet de l'invention, l'algorithme de gestion est configuré pour commander l'arrêt de l'alimentation électrique de l'élément chauffant lorsque la variation du volume d'eau dans le réservoir détectée par le capteur de pression, corrigé par un coefficient K, est égale au volume sélectionné de boisson à préparer, le coefficient K étant compris entre 0,9 et 0,99. Ce coefficient K tient compte de la quantité d'eau évaporée et/ou de la quantité d'eau absorbée par l'ingrédient durant la préparation de la boisson.

Selon une mise en œuvre de la machine de préparation d'une boisson objet de l'invention, celle-ci est une machine à café, le réceptacle étant un porte-filtre. En outre, le porte-filtre comporte un clapet d'obturation mobile entre une position ouverte dans laquelle le café infusé peut s'écouler dans un récipient et une position fermée dans laquelle le café infusé est retenu dans le porte-filtre. La présence du clapet d'obturation permet par exemple de stopper l'écoulement résiduel de la boisson de café lorsque le récipient est retiré ou lorsque la fin du cycle de préparation de la boisson est atteinte.

Selon une réalisation de cette machine à café, celle-ci comporte des moyens de fermeture et d'ouverture du clapet d'obturation assurant le passage de la position ouverte à la position fermée, et inversement. En outre, les moyens de commande sont configurés pour commander électroniquement lesdits moyens de fermeture et d'ouverture dudit clapet d'obturation de sorte que l'ouverture du clapet d'obturation soit réalisée après une période d'infusion corrélée à la période de chauffe de l'élément chauffant.

Selon une autre mise en œuvre de la machine de préparation d'une boisson objet de l'invention, celle-ci est une théière. Dans ce cas, le réceptacle est un panier ajouré apte à contenir des feuilles de thé.

### Brève description des figures

Les caractéristiques et avantages de l'invention apparaîtront à la lecture de la description suivante s'appuyant sur des figures, parmi lesquelles :
[Fig. 1] La figure 1 illustre une vue d'ensemble d'une machine de préparation d'une boisson du type machine à café ;
[Fig. 2] La figure 2 est une vue en coupe de la machine à café de la figure 1, illustrant notamment la chaudière et le clapet anti-retour pour la mise en œuvre d'une pompe thermique ;
[Fig. 3] La figure 3 montre essentiellement la mise en œuvre de la chaudière sur la machine à café des figures 1 et 2 ;
[Fig. 4] La figure 4 schématise un premier agencement d'un capteur de pression ;
[Fig. 5] La figure 5 schématise un second agencement d'un capteur de pression ;
[Fig. 6] La figure 6 illustre en coupe une première mise en œuvre d'une machine de préparation d'une boisson avec un réservoir amovible du bâti ;
[Fig. 7] La figure 7 illustre l'agencement du capteur de pression selon la machine de la figure 6 ;
[Fig. 8] La figure 8 illustre une seconde mise en œuvre d'une machine de préparation d'une boisson avec un réservoir amovible du bâti ;
[Fig. 9] La figure 9 illustre l'agencement du capteur de pression selon la machine de la figure 8 ;
[Fig. 10] La figure 10 schématise une troisième mise en œuvre d'une machine de préparation d'une boisson avec un réservoir amovible du bâti et l'agencement du capteur de pression sur le réservoir de cette machine.

### Description détaillée de l'invention

Dans la suite de la description, le terme machine est utilisé pour désigner la machine de préparation d'une boisson selon l'invention. En outre, les mêmes références sont utilisées pour désigner les caractéristiques identiques ou équivalentes de la machine, selon les diverses variantes de réalisation de celle-ci.

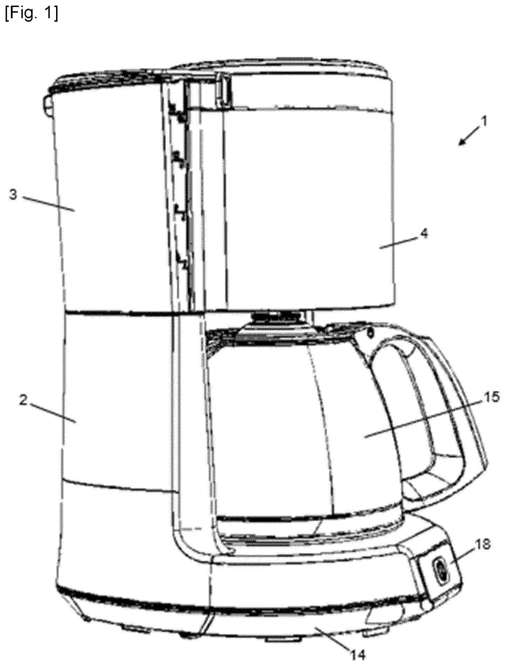

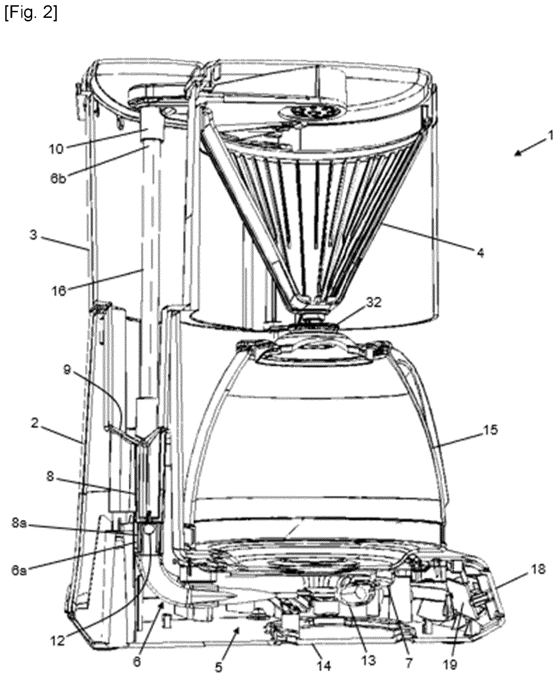

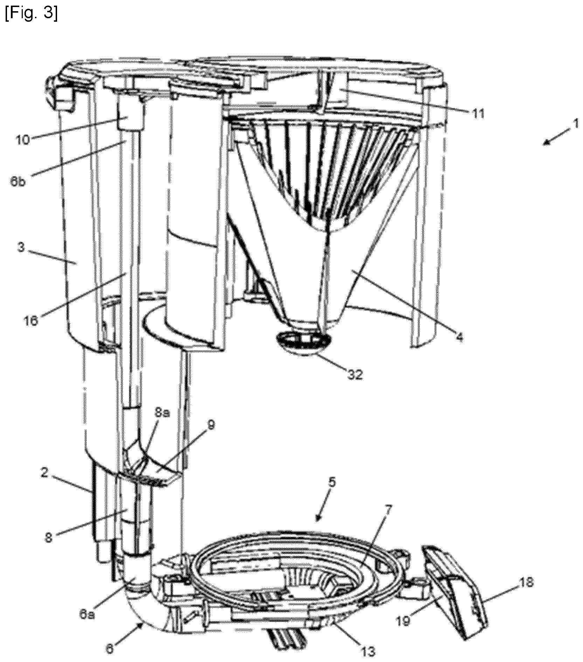

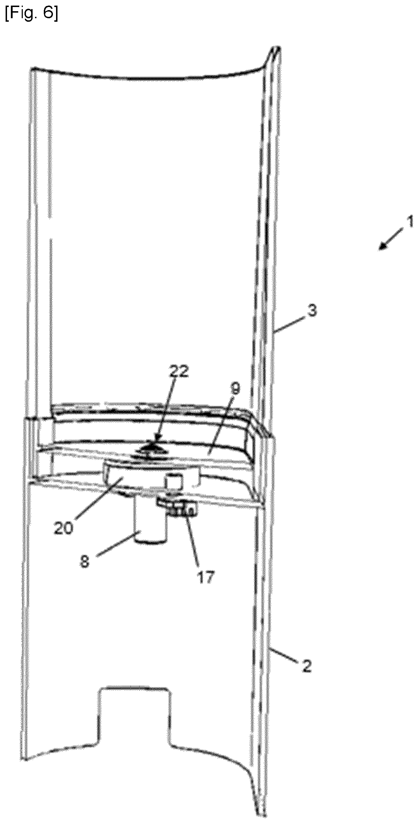

En regard des figures 1 à 3, la machine 1 comprend un bâti 2 et un réservoir 3. Sur ce mode de réalisation des figures 1 à 3, le réservoir 3 est fixé en permanence au bâti 2. La machine 1 comprend un porte-filtre 4 qui permet la réception d'un filtre (non illustré) qui peut être à usage unique ou réutilisable, ledit filtre permettant de contenir de la mouture de café. La machine 1 comprend une chaudière 5 qui comporte un tube 6 et un élément résistif chauffant 7. Le tube 6 comprend une première extrémité 6a qui est raccordée à un premier embout 8 dont un orifice 8a débouche dans le fond 9 du réservoir 3, comme le montre la figure 3. Le tube 6 comprend une seconde extrémité 6b qui est raccordée à un second embout 10 d'une douchette 11 disposée au-dessus du porte-filtre 4 de manière à déverser de l'eau chaude sur la mouture de café (non illustrée) placée dans ledit porte-filtre 4. Un clapet anti-retour 12, illustré en figure 2, est agencé dans l'orifice 8a du premier embout 8, au niveau de son raccordement avec la première extrémité 6a du tube 6, ce clapet anti-retour 12 assurant un écoulement de l'eau dans un seul sens de circulation, du réservoir 3 vers le tube 6. Le tube 6 comprend une première partie 13 en forme de U disposée dans un socle 14 du bâti 2, ce socle 14 permettant la réception d'un récipient 15 du type verseuse. L'élément résistif chauffant 7 présente également une forme en U et est positionné de manière attenante à la première partie 13 du tube 6. Le tube 6 comprend une seconde partie 16 qui prolonge la première partie 13 et est raccordée au second embout 10 de la douchette 11. Sur les figures 2 et 3, la seconde partie 16 du tube 6 passe à l'intérieur du réservoir 3 et s'étend verticalement ; il serait toutefois possible de placer cette seconde partie 16 du tube 6 en dehors du réservoir 3, ce qui sera tout particulièrement le cas pour des variantes de la machine 1 qui comportent un réservoir 3 amovible du bâti 2, comme cela sera décrit ci-après en regard des figures 6 à 10. Lorsque l'élément résistif chauffant 7 est activé, celui-ci chauffe l'eau disposée dans la première partie 13 du tube 6, l'eau chauffant et montant en pression de vaporisation, le clapet anti-retour 12 empêche la remontée de l'eau chaude sous pression dans le réservoir 3, ce qui force l'eau chaude à monter dans la seconde partie 16 du tube 6 et à sortir par la douchette 11, l'eau chaude se déversant dans le porte-filtre 4. Cette mise en œuvre sur la machine 1 permet de constituer une pompe thermique, bien connue sur les machines à café traditionnelles.

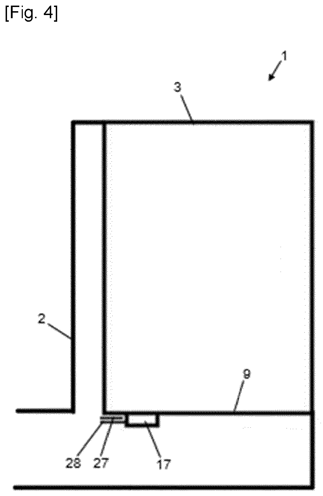

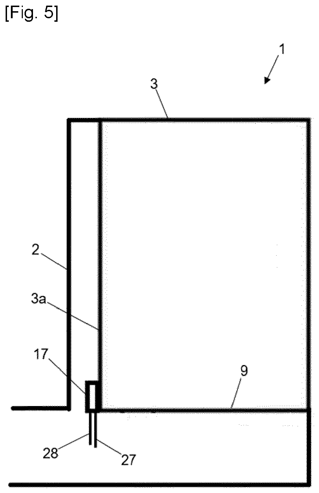

La machine 1 comprend un capteur de pression 17 qui peut être agencé horizontalement dans le fond 9 du réservoir 3 ; comme schématisé en figure 4, ou verticalement sur une paroi verticale 3a du réservoir 3, à proximité dudit fond 9, comme schématisé sur la figure 5. Le capteur de pression 17 est disposé à l'extérieur du réservoir 3 sur ces figures 4 et 5 et communique avec celui-ci de manière étanche. On pourrait toutefois agencer le capteur de pression 17 dans le réservoir 3. Le capteur de pression 17 est agencé de manière étanche sur le réservoir 3, par exemple au moyen d'une résine d'étanchéité, afin d'empêcher une fuite d'eau. Le capteur de pression 17 permet de mesurer en continu la pression relative - le différentiel entre la pression absolue et la pression atmosphérique - causée par la colonne d'eau se trouvant dans le réservoir 3.

La machine 1 comprend un clavier de sélection 18 agencé en façade du bâti 2 et permettant de sélectionner un volume de café à préparer, celui-ci pouvant par exemple correspondre à un volume d'une tasse, d'un mug ou du récipient 15. Ce clavier de sélection 18 est connecté électriquement à une carte électronique 19 qui permet de commander l'activation électrique de l'élément résistif chauffant 7 en fonction du volume de café sélectionné sur le clavier de sélection 18 et du volume d'eau écoulé du réservoir 3. Cette carte électronique 19 comporte un programme informatique mettant en œuvre un algorithme de gestion configuré pour déclencher ou couper l'alimentation électrique de l'élément résistif chauffant 7 de manière à fournir audit réceptacle 15 un volume d'eau chaude correspondant au volume sélectionné.

Le capteur de pression 17 est raccordé électriquement à cette carte électronique 19 par le biais de fils électriques 27, 28 (figures 4 et 5), afin de restituer en continu au programme informatique la mesure de la pression absolue. Cette pression est utilisée par l'algorithme de gestion pour déterminer la quantité d'eau transférée du réservoir 3 vers le tube 6.

En début d'un cycle de préparation de la boisson, le capteur de pression 17 mesure la pression de l'eau dans le réservoir 3, l'algorithme de gestion déduisant alors au moyen d'une formule mathématique appropriée la hauteur de la colonne d'eau dans le réservoir d'eau H0 en début de cycle. L'algorithme de gestion indique à la carte électronique 19 d'activer l'élément résistif chauffant 7, ce qui se traduit par un écoulement de l'eau chaude dans le tube 6 et par une diminution du niveau de la colonne d'eau dans le réservoir 3. Tout au long du cycle de préparation de café, le capteur de pression 17 mesure en continu la pression relative et la communique à l'algorithme de gestion qui calcule la hauteur Ht de la colonne d'eau dans le réservoir 3 et en déduit la diminution de la hauteur de la colonne d'eau par rapport à la hauteur initiale (H0 - Ht). En connaissant la géométrie du réservoir 3, l'algorithme de gestion en déduit la diminution du volume d'eau dans le réservoir 3. Pour simplifier la programmation de l'algorithme de gestion, le réservoir 3 s'étend verticalement et présente préférentiellement une section transversale constante sur toute sa hauteur, par exemple une section cylindrique ou ovale.

L'algorithme de gestion connait ainsi, grâce au capteur de pression 17, la quantité d'eau entrant dans le tube 6, laquelle correspond à la diminution du niveau de la colonne d'eau dans le réservoir 3. De préférence, l'algorithme applique ensuite un coefficient K de correction qui est de préférence compris entre 0,9 et 0,99, par exemple 0,95 pour une cafetière traditionnelle, ce coefficient tenant compte de l'évaporation de l'eau chaude et de l'absorption d'eau par la mouture de café. L'algorithme de gestion en déduit ainsi la quantité de café délivrée dans le réceptacle 15, corrigée de l'évaporation d'eau et de la quantité d'eau imprégnée dans la mouture de café. Lorsque la quantité de café délivrée atteint la quantité de consigne choisie sur le clavier de sélection 18, l'algorithme de gestion indique à la carte électronique 19 de couper l'alimentation électrique de l'élément résistif chauffant 7, ce qui achève le cycle de préparation de la boisson.

Les figures 6 à 10 illustrent des variantes de la machine 1 qui présentent un réservoir 3 amovible du bâti 2. Le principe reste inchangé quant à la mise en œuvre de la mesure du volume de café délivré au réceptacle 15 au moyen de la mesure de la diminution du volume d'eau dans le réservoir 3, par l'intermédiaire du capteur de pression 17 et de l'algorithme de gestion sur la carte électronique 19 et quant à la commande électrique de l'élément résistif chauffant 7 au moyen dudit algorithme de gestion, en fonction de ladite mesure du volume de café délivré et du volume sélectionné sur le clavier de sélection 18.

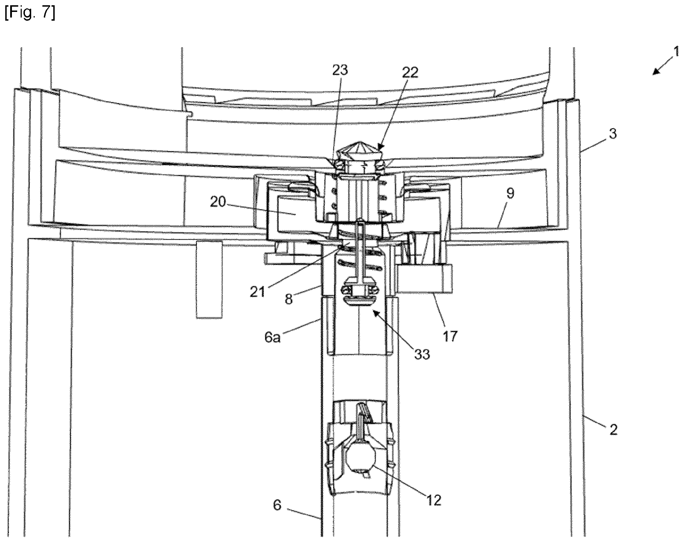

Sur les figures 6 et 7, le bâti 2 de la machine 1 comprend une cavité 20, le premier embout 8 ayant un orifice 21 qui débouche sur cette cavité 20. Le fond 9 du réservoir 3 comprend une valve 22 qui pénètre dans cette cavité 20 lorsque le réservoir 3 est placé sur le bâti 2, comme l'illustrent ces figures 6 et 7. La valve 22 est ouverte et permet à l'eau de couler par un orifice 23 sur le fond 9 dudit réservoir 3, ledit orifice 23 communiquant avec la cavité 20 sur le bâti 2, lorsque le réservoir 3 est placé sur le bâti 2 (sur les figures 6 et 7, la valve 22 est illustrée en position fermée et non en position ouverte). Inversement, lorsque le réservoir 3 est dégagé du bâti 2, la valve 22 est fermée (comme apparaissant en figures 6 et 7), ce qui empêche l'eau de couler par l'orifice 23. Une valve 33, d'une conception similaire à la valve 22, est agencée sur le bâti 2 pour ouvrir ou fermer l'orifice 21 permettant à la cavité 20 de communiquer avec l'embout 8 auquel est raccordé le tube 6 (sur les figures 6 et 7, la valve 33 est illustrée en position ouverte). La valve 22 sur le réservoir 3 et la valve 33 sur le bâti 2 sont actionnées simultanément et mécaniquement vers leurs positions ouvertes ou vers leurs positions fermées lors de la mise en place ou du retrait du réservoir 3 vis-à-vis du bâti 2. Le capteur de pression 17 est agencé au niveau de cette cavité 20, comme l'illustrent les figures 6 et 7, ce qui lui permet de mesurer la pression relative de la colonne d'eau dans le réservoir 3 lorsque celui-ci est placé sur le bâti 2, la valve 22 du réservoir 3 et la valve 33 du bâti 2 étant ouvertes et l'eau pouvant couler du réservoir 3 vers le tube 6 raccordé au premier embout 8 sur le bâti 2.

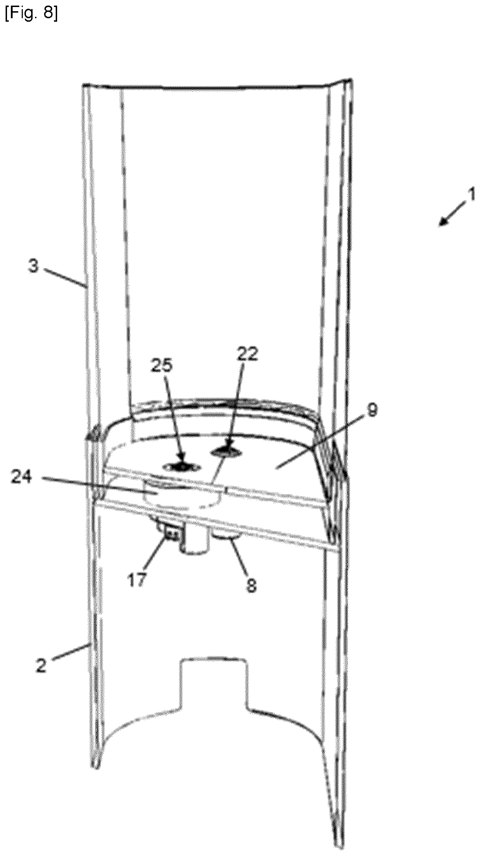

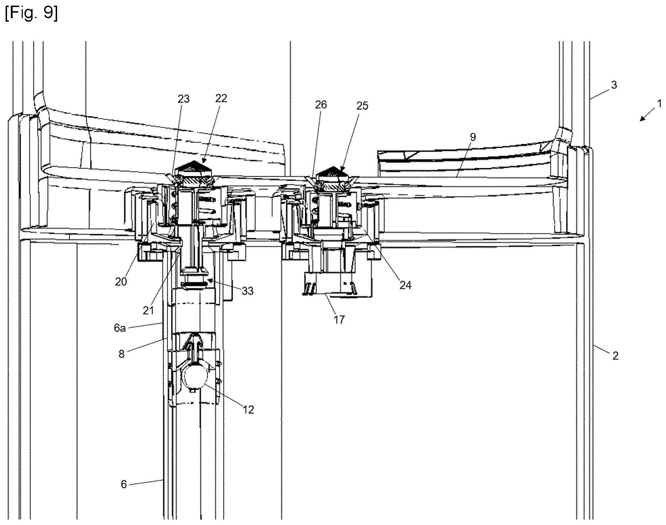

Sur les figures 8 et 9, la machine 1 comporte les mêmes caractéristiques que sur les figures 6 et 7 en ce qui concerne la cavité 20, une valve 22 sur le réservoir 3 permettant d'ouvrir ou de fermer un orifice 23 sur le fond 9 dudit réservoir 3 et une valve 33 sur le bâti 2 permettant d'ouvrir ou fermer un orifice 21 communiquant avec le premier embout 8. A la différence de la machine 1 des figures 6 et 7, le capteur de pression 17 n'est pas agencé au niveau de la cavité 20, comme cela apparaît sur ces figures 8 et 9. En effet, le bâti 2 de la machine 1 comprend une deuxième cavité 24 au niveau de laquelle est agencé le capteur de pression 17. En outre, le fond 9 du réservoir 3 comprend une seconde valve 25 d'une conception identique à la première valve 22 sur ledit réservoir 3, cette seconde valve 25 permettant d'ouvrir un second orifice 26 sur ledit fond 9 lorsque le réservoir 3 est placé sur le bâti 2 (sur les figures 8 et 9, la seconde valve 25 est illustrée en position fermée et non en position ouverte). Lorsque cette seconde valve 25 est dans la position ouverte, l'eau du réservoir 3 pénètre dans la deuxième cavité 24, ce qui permet au capteur de pression 17 de mesurer la pression relative de l'eau contenue dans ledit réservoir 3. Inversement, lorsque le réservoir 3 est dégagé du bâti 2, la seconde valve 25 est fermée (comme apparaissant en figures 8 et 9), ce qui empêche l'eau de couler par le second orifice 26.

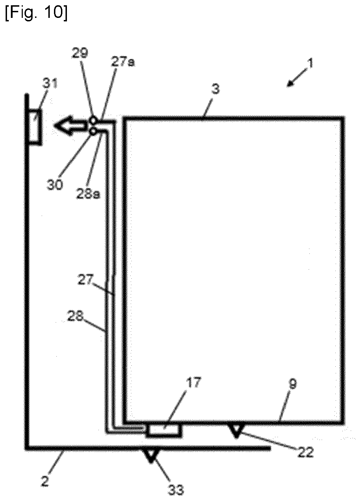

Sur ces figures 6 à 9, le capteur de pression 17 est agencé sur le bâti 2. Des variantes de la machine 1 peuvent être envisagées en agençant le capteur de pression 17 sur le réservoir 3 qui est amovible du bâti 2, comme le schématise par exemple la figure 10. Sur cette figure 10, une conception similaire à celle de la figure 9 sera mise en œuvre entre la valve 22 sur le réservoir 3 et la valve 33 sur le bâti 2 de manière à assurer l'ouverture de ces valves 22, 33 lorsque le réservoir 3 est placé sur le bâti 2 et permettre l'écoulement de l'eau du réservoir 3 vers le tube 6 et, inversement, à assurer leur fermeture lorsque le réservoir 3 est retiré du bâti 2 pour empêcher l'écoulement d'eau hors du réservoir 3 et hors du bâti 2. Le capteur de pression 17 comporte deux fils électriques 27, 28 comportant chacun une extrémité libre 27a, 28a munie d'une zone de contact 29, 30 électrique destinée à coopérer avec une borne de connexion 31 agencée sur le bâti 2 et reliée à la carte électronique 19. Les zones de contact 29, 30 sont séparables de la borne de connexion 31 lorsque le réservoir 3 est dégagé du bâti 2.

Sur les figures 2 et 3, le porte-filtre 4 comporte un clapet d'obturation 32 mobile entre une position ouverte dans laquelle le café infusé peut s'écouler dans le récipient 15 et une position fermée dans laquelle le café infusé est retenu dans le porte-filtre 4. La machine 1 comprend des moyens de fermeture et d'ouverture dudit clapet d'obturation 32 pour assurer le passage de la position ouverte à la position fermée, et inversement. Ces moyens de fermeture et d'ouverture peuvent par exemple comporter un électroaimant (non illustré) qui actionne le clapet d'obturation 32, l'électroaimant étant activé par la carte électronique 19 pour passer le clapet d'obturation 32 dans la position ouverte après une période d'infusion de la mouture de café corrélée à une période d'activation de l'élément résistif chauffant 7. De même, la carte électronique 19 désactive l'électroaimant en fin de cycle de préparation de la boisson afin de placer le clapet d'obturation 32 dans la position fermée. La machine 1 peut aussi comporter un signal lumineux ou sonore qui est activé par la carte électronique 19 en fin de cycle de préparation de la boisson, simultanément à la fermeture dudit clapet d'obturation 32, ce qui autorise le retrait du récipient 15.

D'autres variantes de la machine 1 peuvent être envisagées dans le cadre de l'invention. Dans la description qui précède, la machine 1 est une cafetière ; l'invention peut toutefois être mise en œuvre sur d'autres types de machine, par exemple des théières.

## Revendications

1. Machine (1) de préparation d'une boisson à partir d'un ingrédient, notamment de la mouture de café ou du thé, comportant :
- un réservoir d'eau (3),
- une chaudière (5) comprenant un tube à eau (6) et un élément résistif chauffant (7) configuré pour chauffer l'eau circulant dans le tube à eau,
- un réceptacle (4) destiné à recevoir l'ingrédient,
- un clapet anti-retour (12) agencé entre ledit réservoir d'eau et ledit tube à eau pour la mise en œuvre d'une pompe thermique assurant un écoulement de l'eau chaude dudit tube à eau vers ledit réceptacle,
- des moyens de commande (18, 19) configurés pour commander électroniquement l'alimentation électrique de l'élément chauffant et pour permettre de sélectionner un volume de boisson à préparer, lesdits moyens de commande mettant en œuvre un algorithme de gestion configuré pour déclencher ou couper l'alimentation électrique dudit élément chauffant de manière à fournir audit réceptacle un volume d'eau chaude,
ladite machine de préparation d'une boisson étant **caractérisée en ce que** les moyens de commande comportent un capteur de pression (17) destiné à détecter une variation du volume d'eau dans le réservoir (3) et **en ce que** l'algorithme de gestion commande l'arrêt de l'alimentation électrique de l'élément résistif chauffant (7) lorsque la variation du volume d'eau dans le réservoir permet de réaliser le volume sélectionné de boisson à préparer.

2. Machine (1) de préparation d'une boisson selon la revendication 1, dans laquelle le réservoir (3) comporte un fond (9), le capteur de pression (17) étant agencé sur le fond ou à proximité du fond.

3. Machine (1) de préparation d'une boisson selon l'une quelconque des revendications 1 à 2, dans laquelle le capteur de pression (17) est agencé horizontalement.

4. Machine (1) de préparation d'une boisson selon l'une quelconque des revendications 1 à 2, dans laquelle le capteur de pression (17) est agencé verticalement.

5. Machine (1) de préparation d'une boisson selon l'une quelconque des revendications 1 à 4, laquelle comporte un bâti (2), le réservoir (3) étant amovible du bâti, le réservoir et le bâti comportant chacun une valve (22, 33) pour empêcher une fuite d'eau lorsque le réservoir est retiré du bâti.

6. Machine (1) de préparation d'une boisson selon la revendication 5, dans laquelle le capteur de pression (17) est assujetti au réservoir (3) et comprend au moins un fil électrique (27, 28) comportant une extrémité libre (27a, 28a) munie d'une zone de contact (29, 30) électrique destinée à coopérer avec une borne de connexion (31) agencée sur le bâti (2) et reliée aux moyens de commande (19), la zone de contact étant séparable de la borne de connexion.

7. Machine (1) de préparation d'une boisson selon la revendication 5, dans laquelle le capteur de pression (17) est assujetti au bâti (2) et agencé en aval de la valve (22) du réservoir (3), lorsque le réservoir est positionné sur le bâti.

8. Machine (1) de préparation d'une boisson selon la revendication 7, dans laquelle le bâti (2) comporte une cavité (20) à laquelle est reliée la valve (33) dudit bâti, le capteur de pression (17) étant agencé dans cette cavité directement en aval de la valve du bâti, la valve (22) du réservoir (3) étant reliée à ladite cavité (20) lorsque ledit réservoir est placé sur le bâti.

9. Machine (1) de préparation d'une boisson selon la revendication 5, dans laquelle le bâti (2) comporte une deuxième cavité (24) et le réservoir (3) est muni d'une deuxième valve (25) reliée à ladite cavité (24) lorsque le réservoir est placé sur le bâti, le capteur de pression (17) étant agencé dans cette cavité (24).

10. Machine (1) de préparation d'une boisson selon la revendication 9, dans laquelle la deuxième cavité (24) est agencée sous le réservoir (3) lorsque celui-ci est placé sur le bâti (2).

11. Machine (1) de préparation d'une boisson selon l'une quelconque des revendications 1 à 10, dans laquelle le réservoir (3) s'étend selon une direction verticale et présente une section transversale à la direction verticale constante.

12. Machine (1) de préparation d'une boisson selon l'une quelconque des revendications 1 à 11, dans laquelle l'algorithme de gestion est configuré pour commander l'arrêt de l'alimentation électrique de l'élément résistif chauffant (7) lorsque la variation du volume d'eau dans le réservoir (3) détectée par le capteur de pression (17), corrigé par un coefficient K, est égale au volume sélectionné de boisson à préparer, le coefficient K étant compris entre 0,9 et 0,99.

13. Machine (1) de préparation d'une boisson selon l'une quelconque des revendications 1 à 12, laquelle est une machine à café, le réceptacle (4) étant un porte-filtre, le porte-filtre comportant un clapet d'obturation (32) mobile entre une position ouverte dans laquelle le café infusé peut s'écouler dans un récipient (15) et une position fermée dans laquelle le café infusé est retenu dans le porte-filtre.

14. Machine (1) de préparation d'une boisson selon la revendication 13, laquelle comporte des moyens de fermeture et d'ouverture dudit clapet d'obturation (32) assurant le passage de la position ouverte à la position fermée, et inversement, les moyens de commande (18, 19) étant configurés pour commander électroniquement lesdits moyens de fermeture et d'ouverture dudit clapet d'obturation (32) de manière à ce que l'ouverture du clapet d'obturation soit réalisée après une période d'infusion corrélée à la période de chauffe de l'élément chauffant.

15. Machine (1) de préparation d'une boisson selon l'une quelconque des revendications 1 à 12, laquelle est une théière.

## Patentansprüche

1. Maschine (1) zur Zubereitung eines Getränks ausgehend von einer Zutat, insbesondere Kaffeepulver oder Tee, umfassend:
- einen Wasserbehälter (3),
- einen Kessel (5), der ein Wasserrohr (6) und ein Widerstandsheizelement (7) umfasst, das konfiguriert ist, um das Wasser, das in dem Wasserrohr zirkuliert, zu heizen,
- eine Aufnahme (4), die dazu vorgesehen ist, die Zutat aufzunehmen,
- ein Rückschlagventil (12), das zwischen dem Wasserbehälter und dem Wasserrohr angeordnet ist, für den Einsatz einer Wärmepumpe, die ein Fließen des heißen Wassers von dem Wasserrohr zu der Aufnahme sicherstellt,
- Steuermittel (18, 19), die konfiguriert sind, um die elektrische Versorgung des Heizelements elektronisch zu steuern und um zu ermöglichen, ein zuzubereitendes Volumen an Getränk auszuwählen, wobei die Steuermittel einen Verwaltungsalgorithmus einsetzen, der konfiguriert ist, um die elektrische Versorgung des Heizelements auszulösen oder zu unterbrechen, sodass der Aufnahme ein Volumen an heißem Wasser geliefert wird,
wobei die Maschine zur Zubereitung eines Getränks **dadurch gekennzeichnet ist, dass** die Steuermittel einen Drucksensor (17) umfassen, der dazu vorgesehen ist, eine Änderung des Wasservolumens in dem Behälter (3) zu erfassen und dadurch, dass der Verwaltungsalgorithmus das Stoppen der elektrischen Versorgung des Widerstandsheizelements (7) steuert, wenn die Änderung des Wasservolumens in dem Behälter ermöglicht, das ausgewählte Volumen des zuzubereitenden Getränks umzusetzen.

2. Maschine (1) zur Zubereitung eines Getränks nach Anspruch 1, wobei der Behälter (3) einen Boden (9) umfasst, wobei der Drucksensor (17) auf dem Boden oder in der Nähe des Bodens angeordnet ist.

3. Maschine (1) zur Zubereitung eines Getränks nach einem der Ansprüche 1 bis 2, wobei der Drucksensor (17) horizontal angeordnet ist.

4. Maschine (1) zur Zubereitung eines Getränks nach einem der Ansprüche 1 bis 2, wobei der Drucksensor (17) vertikal angeordnet ist.

5. Maschine (1) zur Zubereitung eines Getränks nach einem der Ansprüche 1 bis 4, die ein Untergestell (2) umfasst, wobei der Behälter (3) von dem Untergestell abnehmbar ist, wobei der Behälter und das Untergestell jeweils ein Ventil (22, 33) umfassen, um ein Auslaufen von Wasser zu verhindern, wenn der Behälter von dem Untergestell abgenommen wird.

6. Maschine (1) zur Zubereitung eines Getränks nach Anspruch 5, wobei der Drucksensor (17) an dem Behälter (3) festgemacht ist und mindestens ein elektrisches Kabel (27, 28) umfasst, das ein freies Ende (27a, 28a) umfasst, das mit einem elektrischen Kontaktbereich (29, 30) ausgestattet ist, der dazu vorgesehen ist, mit einer Verbindungsklemme (31) zusammenzuwirken, die auf dem Untergestell (2) angeordnet ist und mit den Steuermitteln (19) verbunden ist, wobei der Kontaktbereich von der Verbindungsklemme trennbar ist.

7. Maschine (1) zur Zubereitung eines Getränks nach Anspruch 5, wobei der Drucksensor (17) an dem Untergestell (2) festgemacht ist und stromabwärts des Ventils (22) des Behälters (3) angeordnet ist, wenn der Behälter auf dem Untergestell positioniert ist.

8. Maschine (1) zur Zubereitung eines Getränks nach Anspruch 7, wobei das Untergestell (2) einen Hohlraum (20) umfasst, mit dem das Ventil (33) des Untergestells verbunden ist, wobei der Drucksensor (17) in diesem Hohlraum direkt stromabwärts des Ventils des Untergestells angeordnet ist, wobei das Ventil (22) des Behälters (3) mit dem Hohlraum (20) verbunden ist, wenn der Behälter auf dem Untergestell platziert ist.

9. Maschine (1) zur Zubereitung eines Getränks nach Anspruch 5, wobei das Untergestell (2) einen zweiten Hohlraum (24) umfasst und der Behälter (3) mit einem zweiten Ventil (25) ausgestattet ist, das mit dem Hohlraum (24) verbunden ist, wenn der Behälter auf dem Untergestell platziert ist, wobei der Drucksensor (17) in diesem Hohlraum (24) angeordnet ist.

10. Maschine (1) zur Zubereitung eines Getränks nach Anspruch 9, wobei der zweite Hohlraum (24) unter dem Behälter (3) angeordnet ist, wenn dieser auf dem Untergestell (2) platziert ist.

11. Maschine (1) zur Zubereitung eines Getränks nach einem der Ansprüche 1 bis 10, wobei der Behälter (3) sich in einer vertikalen Richtung erstreckt und in der vertikalen Richtung einen konstanten Querschnitt aufweist.

12. Maschine (1) zur Zubereitung eines Getränks nach einem der Ansprüche 1 bis 11, wobei der Verwaltungsalgorithmus konfiguriert ist, um das Stoppen der elektrischen Versorgung des Widerstandsheizelements (7) zu steuern, wenn die Änderung des von dem Drucksensor (17) erfassten Wasservolumens im Behälter (3), um einen Koeffizienten K korrigiert, gleich dem ausgewählten Volumen des zuzubereitenden Getränks ist, wobei der Koeffizient zwischen 0,9 und 0,99 beträgt.

13. Maschine (1) zur Zubereitung eines Getränks nach einem der Ansprüche 1 bis 12, die eine Kaffeemaschine ist, wobei die Aufnahme (4) ein Filterhalter ist, wobei der Filterhalter ein Verschlussventil (32) umfasst, das zwischen einer offenen Position, in der der gezogene Kaffee in ein Gefäß (15) fließen kann, und einer geschlossenen Position, in der der gezogene Kaffee in dem Filterhalter zurückgehalten wird, bewegbar ist.

14. Maschine (1) zur Zubereitung eines Getränks nach Anspruch 13, die Mittel zum Schließen und Öffnen des Verschlussventils (32) umfasst, die den Übergang von der offenen Position in die geschlossene Position und umgekehrt sicherstellen, wobei die Steuermittel (18, 19) konfiguriert sind, um die Mittel zum Öffnen und Schließen des Verschlussventils (32) elektronisch zu steuern, sodass die Öffnung des Verschlussventils nach einer Infusionszeitpanne, die mit der Heizzeitspanne des Heizelements korreliert, umgesetzt wird.

15. Maschine (1) zur Zubereitung eines Getränks nach einem der Ansprüche 1 bis 12, die eine Teemaschine ist.

## Claims

1. Machine (1) for preparing a beverage from an ingredient, in particular coffee or tea grounds, comprising:
- a water tank (3),
- a boiler (5) comprising a water tube (6) and a resistive heating element (7) configured to heat the water circulating in the water tube,
- a container (4) intended to receive the ingredient,
- a check valve (12) arranged between said water tank and said water tube for implementing a heat pump ensuring a flow of hot water from said water tube to said container,
- control means (18, 19) configured to electronically control the powering of the heating element and to enable to select a beverage volume to be prepared, said control means implementing a management algorithm configured to trigger or cut off the power of said heating element so as to supply said container with a volume of hot water,
said machine for preparing a beverage being **characterised in that** the control means comprise a pressure sensor (17) intended to detect a variation of the water volume in the tank (3) and **in that** the management algorithm controls the stopping of power of the resistive heating element (7) when the variation of the water volume in the tank enables to achieve the selected volume of beverage to be prepared.

2. Machine (1) for preparing a beverage according to claim 1, wherein the tank (3) comprises a bottom (9), the pressure sensor (17) being arranged on the bottom or in the proximity of the bottom.

3. Machine (1) for preparing a beverage according to any one of claims 1 to 2, wherein the pressure sensor (17) is arranged horizontally.

4. Machine (1) for preparing a beverage according to any one of claims 1 to 2, wherein the pressure sensor (17) is arranged vertically.

5. Machine (1) for preparing a beverage according to any one of claims 1 to 4, which comprises a casing (2), the tank (3) being removable from the casing, the tank and the casing each comprising a valve (22, 33) to prevent a water leakage when the tank is removed from the casing.

6. Machine (1) for preparing a beverage according to claim 5, wherein the pressure sensor (17) is subservient to the tank (3) and comprises at least one electric wire (27, 28) comprising a free end (27a, 28a) provided with a electric contact zone (29, 30) intended to engage with a connecting terminal (31) arranged on the casing (2) and connected to the control means (19), the contact zone being separable from the connecting terminal.

7. Machine (1) for preparing a beverage according to claim 5, wherein the pressure sensor (17) is subservient to the casing (2) and arranged downstream from the valve (22) of the tank (3), when the tank is positioned on the casing.

8. Machine (1) for preparing a beverage according to claim 7, wherein the casing (2) comprises a cavity (20) to which is connected the valve (33) of said casing, the pressure sensor (17) being arranged in this cavity directly downstream from the valve of the casing, the valve (22) of the tank (3) being connected to said cavity (20) when said tank is placed on the casing.

9. Machine (1) for preparing a beverage according to claim 5, wherein the casing (2) comprises a second cavity (24) and the tank (3) is provided with a second valve (25) connected to said cavity (24) when the tank is placed on the casing, the pressure sensor (17) being arranged in this cavity (24).

10. Machine (1) for preparing a beverage according to claim 9, wherein the second cavity (24) is arranged under the tank (3) when this is placed on the casing (2).

11. Machine (1) for preparing a beverage according to any one of claims 1 to 10, wherein the tank (3) extends along a vertical direction and has a cross-section transverse to the constant vertical direction.

12. Machine (1) for preparing a beverage according to any one of claims 1 to 11, wherein the management algorithm is configured to control the stopping of the power of the resistive heating element (7) when the variation of the water volume in the tank (3) detected by the pressure sensor (17), corrected by a coefficient K, is equal to the selected beverage volume to be prepared, the coefficient K being comprised between 0.9 and 0.99.

13. Machine (1) for preparing a beverage according to any one of claims 1 to 12, which is a coffee machine, the container (4) being a filter holder, the filter holder comprising a shut-off valve (32) which is movable between an open position wherein the infused coffee can flow into a container (15) and a closed position wherein the infused coffee is retained in the filter holder.

14. Machine (1) for preparing a beverage according to claim 13, which comprises means for closing and opening said shut-off valve (32) ensuring the passage from the open position to the closed position, and conversely, the control means (18, 19) being configured to electronically control said means for closing and opening said shut-off valve (32) such that the opening of the shut-off valve is performed after an infusion period correlated to the heating period of the heating element.

15. Machine (1) for preparing a beverage according to any one of claims 1 to 12, which is a teapot.
